(19) Europäisches Patentamt
European Patent Office
Office européen des brevets

(11) **EP 3 234 518 B1**

(12) **EUROPÄISCHE PATENTSCHRIFT**

(45) Veröffentlichungstag und Bekanntmachung des Hinweises auf die Patenterteilung:
**05.05.2021  Patentblatt 2021/18**

(21) Anmeldenummer: **15791290.8**

(22) Anmeldetag: **09.11.2015**

(51) Int Cl.:
*G01F 23/296* (2006.01)     *G01N 9/00* (2006.01)
*G01N 29/02* (2006.01)     *G01N 29/036* (2006.01)
*G01N 11/16* (2006.01)

(86) Internationale Anmeldenummer:
**PCT/EP2015/076022**

(87) Internationale Veröffentlichungsnummer:
**WO 2016/096242 (23.06.2016 Gazette 2016/25)**

(54) **VIBRONISCHER SENSOR**

VIBRONIC SENSOR

CAPTEUR VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2014   DE 102014119061**

(43) Veröffentlichungstag der Anmeldung:
**25.10.2017   Patentblatt 2017/43**

(73) Patentinhaber: **Endress+Hauser SE+Co. KG 79689 Maulburg (DE)**

(72) Erfinder:
• **BRENGARTNER, Tobias**
**79312 Emmendingen (DE)**
• **D'ANGELICO, Sascha**
**79595 Rümmingen (DE)**

(74) Vertreter: **Andres, Angelika Maria Endress+Hauser Group Services (Deutschland) AG+Co. KG Colmarer Straße 6 79576 Weil am Rhein (DE)**

(56) Entgegenhaltungen:
EP-A2- 0 320 637     DE-A1- 10 161 071
DE-A1- 19 530 393     DE-A1-102006 034 105
DE-A1-102010 028 303     DE-A1-102010 040 219
DE-A1-102011 075 113     DE-A1-102012 101 667

• **Anonymous: "Band Pass Filter", , 19 April 2009 (2009-04-19), XP055699511, Retrieved from the Internet: URL:https://web.archive.org/web/2009041922 2324/http://www.electronics-tutorials.ws:8 0/filter/filter_4.html [retrieved on 2020-05-28]**

EP 3 234 518 B1

**Beschreibung**

Die Erfindung betrifft einen vibronischen Sensor zur Bestimmung und/oder Überwachung zumindest einer Prozessgröße eines Mediums sowie ein Verfahren zum Betreiben des vibronischen Sensors.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit zu mechanischen Schwingungen angeregt, welche wiederum beispielsweise ein piezoelektrischer Antrieb oder ein elektromagnetischer Antrieb sein kann. Die mechanisch schwingfähige Einheit kann im Falle von Durchflussmessgeräten aber auch als schwingfähiges Rohr ausgebildet sein, welches von dem jeweiligen Medium durchflossen wird, wie beispielsweise in einem nach dem Coriolis-Prinzip arbeitenden Messgerät.

Entsprechende Feldgeräte werden von der Anmelderin in großer Vielfalt hergestellt und im Falle von Füllstandsmessgeräten beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Sowohl das Anregesignal als auch das Empfangssignal sind charakterisiert durch ihre Frequenz, Amplitude und/oder Phase. Entsprechend werden Änderungen in diesen Größen üblicherweise zur Bestimmung der jeweiligen Prozessgröße herangezogen, wie beispielsweise ein vorgegebener Füllstandes eines Mediums in einem Behälter, oder auch die Dichte und/oder Viskosität eines Mediums oder der Durchfluss eines Mediums durch ein Rohr. Im Falle eines vibronischen Grenzstandschalters für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanzfrequenzen, also einer Frequenzverschiebung, unterschieden. Die Dichte und/oder Viskosität wiederum lassen sich mit einem derartigen Messgerät nur ermitteln, wenn die schwingfähige Einheit vom Medium bedeckt ist.

Dabei ist die Antriebs-/Empfangseinheit üblicherweise Teil eines rückgekoppelten elektrischen Schwingkreises, mittels welchem die Anregung der mechanisch schwingfähigen Einheit zu mechanischen Schwingungen erfolgt. Zur Anregung wird häufig mittels eines Regelkreises ein vorgebbarer Wert für die Phasenverschiebung, also ein Sollwert für die Phasenverschiebung zwischen dem Anregesignal und dem Empfangssignal eingestellt. Beispielsweise muss für eine resonante Schwingung der Verstärkungsfaktor ≥1, und die Schwingkreisbedingung, gemäß welcher alle im Schwingkreis auftretenden Phasen ein Vielfaches von 360° ergeben, erfüllt sein. Aus dem Stand der Technik sind verschiedenste Verfahren zur Anregung der mechanisch schwingfähigen Einheit bzw. zur Einstellung einer vorgebbaren Phasenverschiebung bekannt geworden. Dabei kann grundsätzlich zwischen einer analogen und digitalen Anregung unterschieden werden, bei welcher der Schwingkreis aus analogen Komponenten, welche auf den jeweils verwendeten Typ von Sensor angepasst werden müssen, und digitalen Verfahren, welche im Prinzip universell einsetzbar sind, unterschieden werden.

Ein vielfach eingesetztes Anregungsprinzip beinhaltet, dass der Regelkreis zur Einstellung des vorgebbaren Werts für die Phasenverschiebung zwischen Anregesignal und Empfangssignal einen Verstärker und einen Phasenschieber, mittels welchem das Empfangssignal auf das Sendesignal zurückgekoppelt wird, umfasst. Gemäß der DE102006034105A1 wird beispielsweise ein einstellbarer Phasenschieber verwendet. Mittels einer Steuereinheit, welche die Frequenz des zuvor verstärkten Empfangssignals misst und mindestens ausgehend von hinterlegten Daten über die Frequenz-Phasen-Abhängigkeit einer Verstärkereinheit wird der Phasenschieber geregelt.

Aus der DE102007013557A1 ist ferner bekannt geworden, bei welchem der Verstärker einen einstellbaren Verstärkungsfaktor aufweist, welcher mittels einer Regeleinheit derart eingestellt wird, dass die Amplitude des Sendesignals im Wesentlichen innerhalb eines vorgebbaren Amplitudenbandes liegt.

Aus der DE102005015547A1 ist ein vibronischer Sensor bekannt geworden, bei welchem die Elektronikeinheit mindestens einen Allpass zur Einstellung des Sollwerts für die Phasenverschiebung vorgesehen ist. Der Allpass ändert bei konstanter Verstärkung in Abhängigkeit von der Frequenz die Phase eines elektrischen Signals. Insbesondere kann der Allpass derartig gesteuert oder geregelt werden, dass die Phase zwischen Anregesignal und Empfangssignal einstellbar ist. Vorzugsweise wird gemäß einer Ausgestaltung dieser Erfindung das Empfangssignal lediglich gefiltert und/oder verstärkt, bevor es dem Allpass zugeführt, von diesem verarbeitet und rückgeführt wird.

Bei einer analogen Anregung müssen jedoch zwangsläufig die verwendeten analogen Komponenten, aus welchen der Schwingkreis aufgebaut wird, auf den jeweils verwendeten Typ von Sensor angepasst werden. Weiterhin ist die Robustheit des Sensors, insbesondere in Hinblick auf Fremdvibrationen, von der Selektivität der jeweils verwendeten Filter zur Signalaufbereitung und/oder-auswertung abhängig, wobei die verwendeten Filter die Steigung des Phasengangs der Elektronikeinheit bestimmen. Umso größer die Steigung des Phasengangs, desto geringer ist der durch den Filter abzudeckende Frequenzbereich. Entsprechend kann es unter Umständen dazu kommen, dass der Sensor nicht mehr in Resonanz schwingt.

Ein weiteres Anregungsverfahren ist in der DE102009026685A1 beschrieben worden. Die mechanisch schwingfähige Einheit wird mittels eines sogenannten Frequenzsuchlaufs innerhalb eines vorbestimmbaren Frequenzbandes im Arbeitsbereich der schwingfähige Einheit sukzessive mit aufeinanderfolgenden diskreten Anregefrequenzen zu mechanischen Schwingungen angeregt und die entsprechenden Empfangssignale werden empfangen. Dabei wird mittels des Frequenzsuchlaufs diejenige Anregefrequenz ermittelt, bei welcher die schwingfähige Einheit mit einer Schwingungsfrequenz schwingt, die einem vorgebbaren Wert für die Phasenverschiebung entspricht. Mit dieser Anregefrequenz wird die schwingfähige Einheit jeweils beaufschlagt. Eine vorteilhafte Weiterbildung dieses Verfahrens ist Gegenstand der DE102009028022A1, in welcher die Auswertung des Empfangssignals dadurch vereinfacht wird, dass das Empfangssignal phasenselektiv nur zu bestimmten Zeitpunkten abgetastet und ausgewertet wird. Ähnlich wird in der DE102010030982A1 vorgeschlagen, das Empfangssignal zu bezüglich des Sendesignals vorgegebenen diskreten Zeitpunkten abzutasten, die abgetasteten Spannungswerte des Empfangssignals jeweils mit einem Sollwert zu vergleichen, welchen das Empfangssignal zu diesem Zeitpunkt annimmt, wenn der vorgebbare Wert für die Phasenverschiebung vorliegt, und im Falle einer Abweichung eines Spannungswertes von dem Sollwert ausgehend von dem Vorzeichen der Abweichung die Frequenz des Sendesignals zu verringern oder zu erhöhen.

Bei einer Anregung mittels eines Frequenzsuchlaufs und der Auswertung der jeweiligen Phasen- und/oder Amplituden der Empfangssignale muss jedoch beachtet werden, dass eine Abhängigkeit zwischen der Durchlaufgeschwindigkeit des Frequenzsuchlaufs und der Frequenzauflösung besteht.

Eine weitere digitale Möglichkeit, für einen vibronischen Sensor die Phasenverschiebung zwischen Anregesignal und Empfangssignal auf einen vorgebbaren Wert zu regeln, ist in der DE00102010030982A1 offenbart. Das dort beschriebene Verfahren basiert auf dem Funktionsprinzip einer Phasenregelschleife (engl. Phase-Locked-Loop, PLL). Dabei wird die Frequenz des Anregesignals derart eingestellt, dass ein vorgebbarer Wert für die Phasenverschiebung zwischen dem Anregesignal und dem Empfangssignal besteht.

Diese Art der Anregung weist gegenüber der Anregung mittels eines Frequenzsuchlaufs entscheidende Vorteile in Bezug auf die Auswertegeschwindigkeit auf. Allerdings wird jedoch zumindest ein Phasendetektor benötigt, welcher Einfluss auf die Robustheit, damit ist insbesondere unter anderem die Stabilität der Regelung beim Auftreten von Fremdvibrationen gemeint, wie auch auf die Genauigkeit des Regelkreises nimmt. Damit die Auswertung stabil erfolgen kann, muss ferner gewährleistet sein, dass die Amplitude des Anregesignals auf einen konstanten Wert gehalten wird.

Um Probleme beim Betreiben eines vibronischen Sensors beim Auftreten von Fremdvibrationen, wie beispielsweise Vibrationen von Pumpen oder auch Ultraschallbädern, zu reduzieren, schlägt die DE102012101667A1 vor, eine Regel-/Auswerteeinheit dazu zu konfigurieren, beim Vorliegen von zumindest einer Fremdvibration in Abhängigkeit der Frequenz und/oder der Amplitude der Fremdvibration die Schwingungsanregung derart zu steuern, dass das Empfangssignal von der Fremdvibration im Wesentlichen ungestört ist und/oder mindestens eine Frequenz einer Fremdvibration zu unterdrücken.

Die DE102010040219A1 offenbart die Verwendung eines Filters in Form eines Bandpassfilters mit einstellbarer Mittenfrequenz, welcher aus dem Empfangssignal ein Nutzsignal zur weiteren Verarbeitung herausfiltert, um Einflüsse durch Störsignale über den gesamten Nutzfrequenzbereich zu reduzieren. Bei der DE102010028303A1 umfasst die Elektronik ausgangsseitig einen Bandpassfilter mit einstellbarer Mittenfrequenz, welcher dazu dient, ein Nutzsignal aus dem Empfangssignal zu filtern, anhand welchem die jeweilige Prozessgröße bestimmt und/oder überwacht werden kann. Die Mittenfrequenz ist über eine Phasenregelschleife einstellbar und wird auf die Frequenz des Anregesignals eingestellt.

Ausgehend vom genannten Stand der Technik liegt der vorliegenden Erfindung die Aufgabe zugrunde, einen robusten vibronischen Sensor sowie ein Verfahren zum Betreiben des Sensors bereitzustellen.

Diese Aufgabe wird erfindungsgemäß gelöst durch einen vibronischen Sensor ausgeführt zur Bestimmung und/oder Überwachung zumindest einer Prozessgröße eines Mediums in einem Behälter zumindest umfassend eine mechanisch schwingfähige Einheit, eine Antriebs-/Empfangseinheit und eine Elektronikeinheit, wobei die Antriebs-/Empfangseinheit dazu ausgestaltet ist, mittels eines elektrischen Anregesignals die mechanisch schwingfähige Einheit zu mechanischen Schwingungen anzuregen, und die mechanischen Schwingungen der mechanisch schwingfähigen Einheit zu empfangen und in ein elektrisches Empfangssignal umzuwandeln, wobei die Elektronikeinheit dazu ausgestaltet ist, das Anregesignal ausgehend vom Empfangssignal zu erzeugen, und aus dem Empfangssignal die zumindest eine Prozessgröße zu bestimmen, wobei die Elektronikeinheit zumindest ein adaptives Filter umfasst, und wobei die Elektronikeinheit dazu ausgestaltet ist, die Filtercharakteristik derart einzustellen, dass eine Sollphasenverschiebung zwischen dem Anregesignal und dem Empfangssignal auftritt. Indem die Filtercharakteristik passend eingestellt wird, ergibt sich eine bestimmte, definierte, Sollphasenverschiebung zwischen dem Anregesignal und Empfangssignal. Die Sollphasenverschiebung entspricht einem vorgebbaren Wert für die Phasenverschiebung zwischen dem Anregesignal und dem Empfangssignal.

Die Filtercharakteristik beschreibt ganz allgemein das Verhalten des Filters, also dessen Filtereigenschaften, und ist durch die sogenannten Filteranforderungen, wie solche für den Durchlass-, und Sperrbereich, bestimmt. Gegebenenfalls beinhalten die Filteranforderungen ebenfalls Vorgaben bezüglich der Gruppenlaufzeit, des maximalen Überschwingens, der Flankensteilheit, der Mittenfrequenz, der Güte usw. Beispielsweise kann eine der bekannten Filtercharakteristiken Bessel, Legendre, Butterworth, Tschebyscheff, Gauss oder usw. verwendet werden. Je nach gewählter Filtercharakteristik wird für das Filter die Übertragungsfunktion, mittels welcher der Amplituden- und Phasenverlauf, sowie der Frequenzgang vollständig bestimmt sind, passend konzipiert.

Die Filtercharakteristik eines adaptiven Filters ist im Betrieb einstellbar. So können beispielsweise die Güte des Filters, welche mit der Bandbreite korreliert, sowie die Lage der Mittenfrequenz eingestellt werden. Entsprechend kann durch die Einstellung einer geeigneten Filtercharakteristik die Phasenverschiebung $\Phi_{Filter}$ zwischen dem Eingangs- und Ausgangssignal des Filters passend eingestellt werden. Als Konsequenz der Einstellung der Phasenverschiebung zwischen dem Eingangssignal und dem Ausgangssignal des Filters auf einen vorgebbaren Wert, stellt sich die Frequenz des Anregesignals derart ein, dass zwischen dem Anregesignal und Empfangssignal eine Sollphasenverschiebung von $\Phi_{soll}=360°- \Phi_{Filter}$ auftritt. Es kann also durch eine geeignete Einstellung der Filtercharakteristik eine Sollphasenverschiebung zwischen Anregesignal und Empfangssignal eingestellt werden. Da es sich um ein adaptives, also mitführbares Filter, handelt, kann die Güte des Filters erhöht werden, ohne den jeweiligen Frequenzbereich einzuschränken, wie es für ein festes Filter der Fall wäre.

Vorteilhaft kann die Einstellung der Sollphasenverschiebung unabhängig von auftretenden Störeinflüssen, wie beispielsweise Fremdvibrationen, erfolgen. So ist ein erfindungsgemäßer vibronischer Sensor besonders robust, insbesondere gegenüber Fremdvibrationen.

Darüber hinaus macht die Verwendung des adaptiven Filters das entsprechende Feldgerät für eine Vielzahl von Anwendungen einsetzbar. Beispielsweise können abhängig von der Anwendung unterschiedliche Phaseneinstellgenauigkeiten und damit einhergehend Arbeitsgeschwindigkeiten des Feldgeräts zur Einstellung der Sollphasenverschiebung realisiert werden. Außerdem können je nach Anwendung unterschiedliche Sollphasenverschiebungen eingestellt werden, so dass je nach Anwendung ein passender Wert für die Sollphasenverschiebung auftritt. Die erfindungsgemäße Lösung lässt sich außerdem vorteilhaft sowohl für digitale als auch für analoge Ausführungen des jeweiligen Schwingkreises zur Anregung der schwingfähigen Einheit anwenden und ist einfach auf unterschiedliche Sensoren, insbesondere unterschiedliche schwingfähige Einheiten anpassbar.

Erfindungsgemäß ist die Elektronikeinheit dazu ausgestaltet, die Sollphasenverschiebung durch Einstellung der Mittenfrequenz des adaptiven Filters einzustellen. Die Mittenfrequenz wird also derart variiert, dass zwischen dem Anregesignal und dem Empfangssignal eine Sollphasenverschiebung vorliegt.

Die Elektronikeinheit umfasst eine Phasenregeleinheit, welche die Mittenfrequenz des adaptiven Filters derart regelt, dass für die Phasenverschiebung zwischen einem Eingangssignal und einem Ausgangssignal des Filters ein vorgebbarer Wert vorliegt, so, dass sich zwischen dem Anregesignal ($U_A$) und dem Empfangssignal ($U_E$) die Sollphasenverschiebung ($\Phi_{soll}$) ergibt. Die Einstellung der Sollphasenverschiebung zwischen dem Anregesignal und dem Empfangssignal erfolgt also mittels einer Regelung der Phasenverschiebung zwischen dem Eingangssignal und Ausgangssignal des adaptiven Filters.

Es ist von Vorteil, wenn die Elektronikeinheit einen Ringspeicher und/oder einen Phasenschieber umfasst, mittels welchem die Sollphasenverschiebung einstellbar ist. Die Einstellung eines vorgebbaren Werts für die Phasenverschiebung zwischen einem Anregesignal und einem Empfangssignal eines vibronischen Sensors mittels eines Ringspeichers und/oder Phasenschiebers ist beispielsweise in der DE10161071A1 und in der DE10161072A1 beschrieben. Bezogen auf die vorliegende Erfindung können beispielsweise diskrete Werte des Empfangssignals in einem Speicherelement gespeichert und dann mit einer einstellbaren zeitlichen Verzögerung an den adaptiven Filter übergeben werden. Dann resultiert die Sollphasenverschiebung zwischen dem Anregesignal und dem Empfangssignal aus zwei Maßnahmen: aus der mittels der Filtercharakteristik eingestellten Phasenverschiebung zwischen dem Eingangssignal und Ausgangssignal des adaptiven Filters, sowie aus der mittels des Ringspeichers und/oder Phasenschiebers erzeugten Phasenverschiebung $\Phi_{rs}$. Damit ergibt sich die Sollphasenverschiebung $\Phi_{soll}$ zu $\Phi_{soll}=360°-\Phi_{filter}-\Phi_{rs}$. Vorteilhaft kann durch dieses Vorgehen das adaptive Filter unabhängig von dem Wert der Sollphasenverschiebung auf seine Mittenfrequenz eingestellt werden. Diese Einstellung entspricht einer Phasenverschiebung zwischen dem Eingangssignal und dem Ausgangssignal des Filters von 0° oder 90°. Wird ein anderer Wert für die Sollphasenverschiebung zwischen Anregesignal und Empfangssignal gefordert, welche nicht einem Wert von $\Phi_{soll}=360°-\Phi_{filter}$ entspricht, so muss zusätzlich mittels des Ringspeichers und/oder Phasenreglers eine geeignete zusätzliche Phasenverschiebung eingestellt werden, so dass sich die geforderte Sollphasenverschiebung $\Phi_{soll}=360°-\Phi_{filter}-\Phi_{rs}$ einstellt.

Durch Einstellung der Sollphasenverschiebung führt die schwingfähige Einheit mechanische Schwingungen mit der jeweils korrespondierenden Frequenz aus. Im Falle einer Phasenverschiebung von 90° liegt eine sogenannte Grundwellenanregung, das ist eine resonante Schwingung bei der Resonanzfrequenz, in der Regel derjenigen, welche der Grundschwingungsmode entspricht, vor. Durch die Verwendung eines adaptiven Filters zur Anregung der schwingfähigen Einheit können, wie bereits erwähnt, jedoch auch andere Phasenverschiebungen eingestellt werden. Diese Umstellung kann vorteilhaft auf Softwareebene erfolgen. Damit kann eine Elektronikeinheit und Anordnung für unterschiedliche Phasenverschiebungen verwendet werden.

Vorteilhaft ist durch Einstellung der Mittenfrequenz auf die Frequenz des Anregesignals die Schwingfrequenz der mechanisch schwingfähigen Einheit bekannt. Diese wird also während der Anregung direkt mit detektiert, was eine Vereinfachung bezüglich der Signalauswertung innerhalb der Elektronikeinheit mit sich bringt.

In einer bevorzugten Ausgestaltung ist die Bandbreite des adaptiven Filters einstellbar. Eine hohe Bandbreite ermöglicht es, die Resonanzfrequenz der schwingfähigen Einheit einfach und schnell aufzufinden, da auf diese Weise die schwingfähige Einheit mit Frequenzen innerhalb eines großen Frequenzspektrums angeregt wird. Vorteilhaft kann die Schwingkreisbedingung also auch innerhalb eines breiten Frequenzbandes erfüllt werden.

Im Falle einer digitalen auf dem Prinzip einer Phasenregelschleife basierenden Anregung wird dagegen direkt die Phasenverschiebung zwischen dem Anregesignal und Empfangssignal geregelt, was einen eingeregelten Zustand des Schwingsystems erforderlich macht. Die Resonanzfrequenz muss also im Wesentlichen bekannt sein. Da sich jedoch die Güte des Schwingsystems im Betrieb fortlaufend ändern kann, sind die Suche und Regelung der Resonanzfrequenz bei Verwendung einer Phasenregelschleife deutlich komplizierter als für den Fall, welchen die vorliegende Anmeldung beschreibt. Für die vorliegende Erfindung wird nämlich beispielsweise die Mittenfrequenz des digitalen Filters geregelt, dessen Güte konstant ist. Weiterhin kann aufgrund durch die Einstellung der Sollphasenverschiebung durch Regelung der Phasenverschiebung zwischen dem Eingangssignal und Ausgangssignal des adaptiven Filters vom Einsatz zumindest eines spannungsgesteuerten Oszillators (VCO) abgesehen werden.

Für eine genaue Messung ist es wiederum zweckdienlich, eine möglichst kleine Bandbreite zu wählen, um die Messgenauigkeit, so weit möglich, zu maximieren. Eine kleine Bandbreite bewirkt vorteilhaft eine deutliche Reduzierung von Störeinflüssen.

Wird innerhalb des maximal mittels des Frequenzsuchlaufs durchfahrbaren Frequenzintervalls keine Resonanz detektiert, kann beispielsweise eine Blockade an und/oder ein Defekt der mechanisch schwingfähigen Einheit vorliegen.

In einer bevorzugten Ausgestaltung handelt es sich bei dem adaptiven Filter um einen Resonatorfilter. In einer alternativen bevorzugten Ausgestaltung handelt es sich bei dem adaptiven Filter um einen Bandpassfilter, insbesondere um einen Tiefpassfilter, insbesondere um einen Tiefpassfilter 2. Ordnung. Wird beispielsweise die Mittenfrequenz des adaptiven Filters auf die Eingangsfrequenz, also auf die Frequenz des Empfangssignals von der schwingfähigen Einheit geregelt, so ergibt sich bei der Verwendung eines Bandpassfilters eine Phasenverschiebung $\Phi_{filter}$ zwischen Eingangs- und Ausgangssignal von 0°. Bei einem Tiefpassfilter 2. Ordnung, insbesondere mit Resonanzerhöhung, also einem Resonatorfilter, ergibt sich dagegen eine Phasenverschiebung von -90°. Abhängig von der Ausgestaltung der Sensoreinheit ergibt sich dann eine Sollphasenverschiebung zwischen Anregesignal und Empfangssignal, welche einer resonanten Anregung entspricht.

Es ist ferner von Vorteil, wenn die Phasenregeleinheit auf dem Prinzip eines Lock-In-Verstärker basiert. Bei einem Lock-In Verstärker handelt es sich im Prinzip um einen extrem schmalbandigen Bandpassfilter. Entsprechend erlaubt dieses Vorgehen eine Regelung mit verbessertem Signal-zu-Rausch-Verhältnis.

Eine vorteilhafte Ausgestaltung sieht vor, dass die Sollphasenverschiebung 90°, 45°, oder 0° beträgt. Während eine Sollphasenverschiebung von 90° oder 0° abhängig von der Ausgestaltung der Sensoreinheit, zu einer resonanten Anregung der schwingfähigen Einheit führt, zeigt sich eine Sollphasenverschiebung von 45° für die Bestimmung der Dichte als vorteilhaft.

In einer weiteren vorteilhaften Ausgestaltung sind zumindest eine erste und eine zweite Sollphasenverschiebung abwechselnd einstellbar. Es versteht sich von selbst, dass auch drei oder mehr unterschiedliche Sollphasenverschiebungen abwechselnd eingestellt werden können. Somit können beispielsweise abwechselnd ein vorgegebener Füllstand und die Dichte des Mediums bestimmt werden. Ähnlich kann die Elektronikeinheit darüber hinaus dazu ausgestaltet werden, ebenfalls gleichzeitig die Viskosität zu bestimmen. Es können also mehrere Prozessgrößen mittels des gleichen Sensorelements und mittels der gleichen Elektronikeinheit erfasst werden.

Eine besonders bevorzugte Ausgestaltung beinhaltet, dass die Elektronikeinheit eine Amplitudenregeleinheit zur Regelung der Amplitude des Anregesignals auf einen vorgebbaren Wert oder auf einen Wert innerhalb eines vorgebbaren Intervalls umfasst. Mit einer Amplitudenregeleinheit kann vorteilhaft die Amplitudendynamik kontrolliert werden. Damit kann unter anderem der Dämpfung der Schwingungsamplitude der schwingfähigen Einheit beim Eintauchen in unterschiedliche Medien Rechnung getragen werden. Die schwingfähige Einheit wird also jeweils mit einem Signal passender Amplitude beaufschlagt, welches derart gewählt wird, dass die Amplitude des Empfangssignals innerhalb eines bestimmten wählbaren Intervalls liegt.

In einer weiteren bevorzugten Ausführung ist die Elektronikeinheit dazu ausgestaltet, einen Frequenz-Suchlauf auszuführen, im Falle des Unterschreitens eines vorgebbaren Schwellwerts für die Amplitude die schwingfähige Einheit mittels des Frequenz-Suchlaufs anzuregen, und die Mittenfrequenz des adaptiven Filters sukzessive auf innerhalb eines vorgebbaren Frequenzintervalls aufeinander folgende diskrete Anregefrequenzen einzustellen. Beispielsweise kann im Betrieb, sobald der vorgebbare Schwellenwert für die Amplitude bei der Resonanzfrequenz unterschritten wird, von der Phasenregelung auf eine Steuerung des Sensors mit einer Anregung mittels eines Frequenz-Suchlaufs gewechselt werden. Dazu wird die Mittenfrequenz des adaptiven Filters auf diskrete aufeinanderfolgende Frequenzen innerhalb eines vorgebbaren Frequenzbandes eingestellt. Sobald der Schwellenwert für die Amplitude wieder überschritten wird (also beispielsweise die schwingfähige Einheit wieder frei schwingt), kann in den ursprünglichen Modus, in welchem die Anregung mittels einer Sollphasenverschiebung erfolgt, umgestellt werden.

Es ist von Vorteil, wenn es sich bei der Prozessgröße um einen vorgegebenen Füllstand, die Dichte und/oder die Viskosität des Mediums in dem Behälter handelt.

Ebenso ist es von Vorteil, wenn die schwingfähige Einheit eine Membran, ein Einstab oder eine Schwinggabel ist.

Ferner ist es von Vorteil, wenn es sich bei der Antriebs-/Empfangseinheit um eine elektromagnetische oder um eine piezoelektrische Antriebs-/Empfangseinheit handelt.

Die der Erfindung zugrunde liegende Aufgabe wird ferner gelöst durch ein Verfahren zum Betreiben eines vibronischen Sensors zur Bestimmung und/oder Überwachung zumindest einer Prozessgröße eines Mediums in einem Behälter gemäß einer der beschriebenen Ausgestaltungen, wobei eine mechanisch schwingfähige Einheit mittels eines elektrischen Anregesignals zu mechanischen Schwingungen angeregt wird, und die mechanischen Schwingungen der mechanisch schwingfähigen Einheit empfangen und in ein elektrisches Empfangssignal umgewandelt werden, wobei das Anregesignal ausgehend vom Empfangssignal erzeugt wird und die zumindest eine Prozessgröße bestimmt wird, und wobei die Filtercharakteristik des adaptiven Filters derart eingestellt wird, dass eine Sollphasenverschiebung zwischen dem Anregesignal und dem Empfangssignal vorliegt. Auch das erfindungsgemäße Verfahren ist sowohl für digitale als auch für analoge Ausführungen des jeweiligen Schwingkreises zur Anregung der schwingfähigen Einheit anwendbar. Ebenso können mittels des erfindungsgemäßen Verfahrens abhängig von der Anwendung unterschiedliche Phaseneinstellgenauigkeiten realisiert, sowie je nach Anwendung unterschiedliche Sollphasenverschiebungen eingestellt werden.

Erfindungsgemäß wird die Mittenfrequenz des adaptiven Filters derart geregelt wird, dass zwischen dem Anregesignal und dem Empfangssignal eine Sollphasenverschiebung vorliegt. Dies geschieht mittels einer Einstellung der Phasenverschiebung $\Phi_{filter}$ zwischen dem Eingangssignal und Ausgangssignal des adaptiven Filters. Dies ermöglicht, die Schwingfrequenz der mechanisch schwingfähigen Einheit aus der Anregung zu ermitteln, was eine Vereinfachung bezüglich der Signalauswertung innerhalb der Elektronikeinheit mit sich bringt.

Erfindungsemäß wird die Mittenfrequenz des adaptiven Filters derart geregelt, dass für eine Phasenverschiebung ($\Phi_{filter}$) zwischen einem Eingangssignal und einem Ausgangssignal des Filters ein vorgebbarer Wert vorliegt so, dass sich zwischen dem Anregesignal ($U_A$) und dem Empfangssignal ($U_E$) die Sollphasenverschiebung ($\Phi_{soll}$) ergibt.

Die Bandbreite des adaptiven Filters wird eingestellt. Dies bedeutet, dass die Güte des Filters eingestellt wird. Eine hohe Bandbreite ermöglicht es, die Resonanzfrequenz der schwingfähigen Einheit einfach und schnell aufzufinden, da auf diese Weise die schwingfähige Einheit mit Frequenzen innerhalb eines großen Frequenzspektrums angeregt wird. Wird jedoch über das gesamte zugängliche Frequenzintervall keine Resonanz detektiert, kann beispielsweise auf eine Blockade an und/oder auf einen Defekt der mechanisch schwingfähigen Einheit geschlossen werden. Dagegen wird während des Messbetriebs die Bandbreite möglichst klein gewählt, um den Einfluss von Störsignalen zu eliminieren und entsprechend die Messgenauigkeit so weit als möglich zu maximieren.

Es ist von Vorteil, wenn als Sollphasenverschiebung 90°, 45°, oder 0° eingestellt wird. Ebenso ist es von Vorteil, wenn zumindest die erste und zweite Sollphasenverschiebung abwechselnd eingestellt werden.

Schließlich ist es ebenfalls von Vorteil, wenn die Amplitude des Anregesignals auf einen vorgebbaren Wert oder auf einen Wert innerhalb eines vorgebbaren Intervalls geregelt wird. Somit kann die Amplitudendynamik kontrolliert werden. Die schwingfähige Einheit wird also jeweils mit einem Signal passender Amplitude beaufschlagt, welches derart gewählt wird, dass die Amplitude des Empfangssignals innerhalb eines bestimmten wählbaren Intervalls liegt.

Die Erfindung sowie ihre vorteilhaften Ausgestaltungen werden nachfolgend anhand der Figuren Fig. 1 - Fig. 2 näher beschrieben. Es zeigt:

Fig. 1:    eine schematische Skizze eines vibronischen Sensors gemäß Stand der Technik,

Fig. 2:    ein Blockschaltbild einer erfindungsgemäßen Elektronikeinheit,

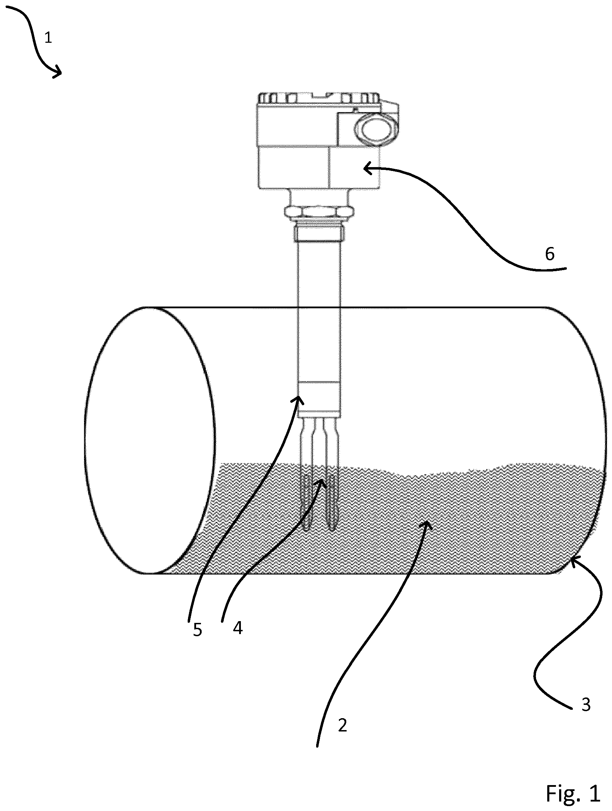

In Fig. 1 ist ein vibronischer Sensor 1 gezeigt.

Dargestellt ist eine schwingfähige Einheit 4 in Form einer Schwinggabel, welche teilweise in ein Medium 2 eintaucht, welches sich in einem Behälter 3 befindet. Die schwingfähige Einheit wird mittels der Anrege-/Empfangseinheit 5 zu mechanischen Schwingungen angeregt, und kann beispielsweise ein piezoelektrischer Stapel- oder Bimorphantrieb sein. Es versteht sich jedoch von selbst, dass auch andere Ausgestaltungen eines vibronischen Sensors unter die Erfindung fallen. Weiterhin ist eine Elektronikeinheit 6 dargestellt, mittels welcher die Signalerfassung, -auswertung und/oder -speisung erfolgt.

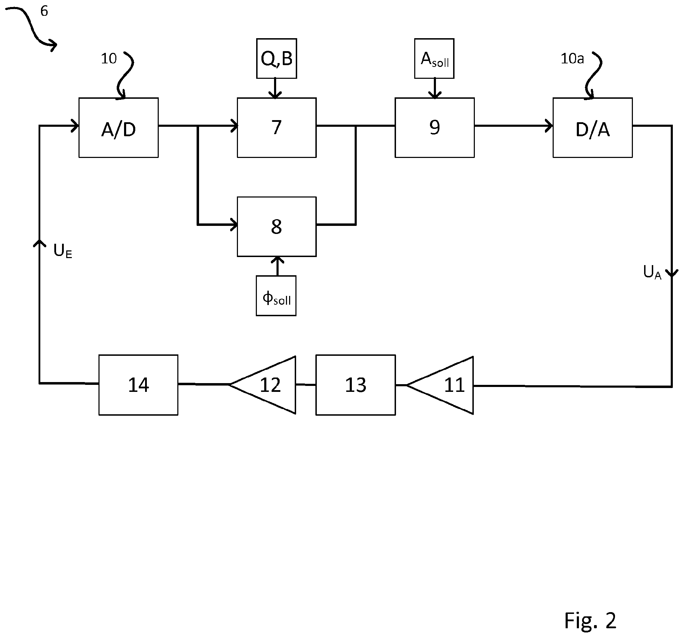

Ein Blockschaltbild einer erfindungsgemäßen Elektronikeinheit ist Gegenstand von Fig. 2. Das Empfangssignal $U_E$ durchläuft zuerst einen Analog-Digital Wandler 10, bevor es dem adaptiven Filter 7 zugeführt wird. Die Filtercharakteristik des adaptiven Filters wird so eingestellt, dass eine geeignete Phasenverschiebung $\Phi_{filter}$ zwischen dem Eingangssignal und dem Ausgangssignal des adaptiven Filters vorliegt. Dadurch ergibt sich eine Sollphasenverschiebung $\Phi_{soll}=360°\text{-}\Phi_{Filter}$ zwischen dem Anregesignal und dem Empfangssignal. Es kann also durch eine geeignete Einstellung der Filtercharakteristik Sollphasenverschiebung zwischen Anregesignal und Empfangssignal eingestellt werden. Beispielsweise kann hierfür eine Phasenregeleinheit 8 verwendet werden, mittels welcher die Mittenfrequenz $f_m$ des adaptiven derart geregelt wird, dass zwischen Anregesignal und Empfangssignal die Sollphasenverschiebung $\Phi_{soll}$ vorliegt. Die Phasenregeleinheit 8 wiederum kann beispielsweise auf dem Prinzip eines Lock-In-Verstärkers basieren.

Die Güte Q des adaptiven Filters 7 lässt sich unter anderem durch Variation des sogenannten Lehr'schen Dämpfungsmaßes D einstellen. Dabei wird folgender Zusammenhang ausgenutzt: $Q=\frac{1}{2D}$, wobei das Lehr'sche Dämpfungsmaß sich wiederum aus den mechanischen Eigenschaften der schwingfähigen Einheit bestimmt.

Die Güte Q des adaptiven Filters 7 hängt darüber hinaus über die Beziehung $B=\frac{f_m}{Q}$ mit der Güte Q und der Mittenfrequenz des adaptiven Filters $f_m$ zusammen. Eine Ausgestaltung der Erfindung beinhaltet, dass die Güte Q des adaptiven Filters 7 bzw. dessen Bandbreite B einstellbar ist.

Das Empfangssignal $U_E$ ist charakterisiert durch seine Frequenz, seine Amplitude und seine Phase. Erfolgt die Phasenregelung der Phasenregeleinheit 8 durch Einstellung der Mittenfrequenz $f_m$ des adaptiven Filters 7 auf die Eingangsfrequenz des adaptiven Filters, so ist zu jedem Zeitpunkt die Frequenz, mit welcher die schwingfähige Einheit schwingt, bekannt.

Weiterhin kann gemäß einer anderen Ausgestaltung eine Amplitudenregeleinheit 9 innerhalb der Elektronikeinheit 6 integriert sein. Mittels der Amplitudenregeleinheit 9 wird die Amplitude A des Anregesignals $U_A$ auf einen vorgebbaren Wert oder auf einen Wert innerhalb eines vorgebbaren Intervalls umfasst. Beispielsweise kann hierfür ein handelsüblicher PI-Regler eingesetzt werden.

Ein Vorteil der Erfindung besteht darin, dass durch die Verwendung eines adaptiven Filters 7 zur Anregung der mechanisch schwingfähigen Einheit 7 keine weiteren Filter zur Signalfilterung vor der Auswertung benötigt werden.

Bevor das Anregesignal $U_A$ über die Ausgangsstufe 11 der Elektronikeinheit an die Sensoreinheit 13 übermittelt wird, durchläuft es einen Digital-Analog-Wandler 10a. Optional kann das von der Sensoreinheit 13 empfangene Empfangssignal $U_E$, bevor es nach Durchlaufen der Eingangsstufe 12 an den Analog-Digital-Wandler 10 weitergeleitet wird, außerdem durch einen Antialiasing-Filter 14 geführt werden.

**Bezugszeichenliste**

| | |
|---|---|
| 1 | Vibronischer Sensor |
| 2 | Medium |
| 3 | Behälter |
| 4 | Schwingfähige Einheit |
| 5 | Elektromechanische Wandlereinheit |
| 6 | Elektronikeinheit |
| 7 | adaptives Filter |
| 8 | Phasenregeleinheit |
| 9 | Amplitudenregeleinheit |
| 10,10a | Analog-Digital Wandler, Digital-Analog-Wandler |
| 11 | Ausgangsstufe |
| 12 | Eingangsstufe |
| 13 | Sensoreinheit |
| 14 | Antialiasing-Filter |

| | |
|---|---|
| $U_A$ | Anregesignal |
| $U_E$ | Empangssignal |
| $f_m$ | Mittenfrequenz des adaptiven Filters |
| $A_{soll}$ | Sollwert der Amplitude |
| $\Phi$ | Phase |
| $\Phi_{soll}$ | Sollphasenverschiebung zwischen Anregesignal und Empfangssignal |
| $\Phi_{filter}$ | Phasenverschiebung zwischen Eingangssignal und Ausgangssignal des adaptiven Filters |
| Q | Güte |
| B | Bandbreite |

**Patentansprüche**

1. Vibronischer Sensor (1) ausgeführt zur Bestimmung und/oder Überwachung zumindest einer Prozessgröße eines Mediums (2) in einem Behälter (3) zumindest umfassend eine mechanisch schwingfähige Einheit (4), eine Antriebs-/Empfangseinheit (5) und eine Elektronikeinheit (6), wobei die Antriebs-/Empfangseinheit (5) dazu ausgestaltet ist, mittels eines elektrischen Anregesignals ($U_A$) die mechanisch schwingfähige Einheit (4) zu mechanischen Schwingungen anzuregen, und die mechanischen Schwingungen der mechanisch schwingfähigen Einheit (4) zu empfangen und in ein elektrisches Empfangssignal ($U_E$) umzuwandeln, wobei die Elektronikeinheit (6) dazu ausgestaltet ist, das Anregesignal ($U_A$) ausgehend vom Empfangssignal ($U_E$) zu erzeugen, und aus dem Empfangssignal ($U_E$) die zumindest eine Prozessgröße zu bestimmen, wobei die Elektronikeinheit (6) zumindest ein adaptives Filter (7) umfasst, **dadurch gekennzeichnet, dass** die Elektronikeinheit (6) dazu ausgestaltet ist, die Filtercharakteristik des adaptiven Filters (7) derart einzustellen, so dass eine Sollphasenverschiebung ($\Phi_{soll}$) zwischen dem Anregesignal ($U_A$) und dem Empfangssignal ($U_E$) auftritt,
dass die Elektronikeinheit (6) dazu ausgestaltet ist, die Sollphasenverschiebung ($\Phi_{soll}$) durch Einstellung der Mittenfrequenz ($f_m$) des adaptiven Filters (7) einzustellen,
dass die Elektronikeinheit eine Phasenregeleinheit umfasst, welche Phasenregeleinheit dazu ausgestaltet ist, die Mittenfrequenz des adaptiven Filters derart zu regeln, dass für eine Phasenverschiebung ($\Phi_{filter}$) zwischen einem Eingangssignal und einem Ausgangssignal des Filters ein vorgebbarer Wert vorliegt so, dass sich zwischen dem Anregesignal ($U_A$) und dem Empfangssignal ($U_E$) die Sollphasenverschiebung ($\Phi_{soll}$) ergibt, und
dass die Bandbreite (B) des adaptiven Filters (7) in einem Messbetrieb im Hinblick auf eine Reduzierung von Störsignalen einstellbar ist

2. Vibronischer Sensor nach Anspruch 1,
**gekennzeichnet dadurch,**
**dass** die Elektronikeinheit (6) einen Ringspeicher und/oder einen Phasenschieber umfasst, mittels welchem die Sollphasenverschiebung ($\Phi_{soll}$) einstellbar ist.

3. Vibronischer Sensor nach zumindest einem der vorhergehenden Ansprüche,
**gekennzeichnet dadurch**
**dass** es sich bei dem adaptiven Filter (7) um einen Resonatorfilter handelt.

4. Vibronischer Sensor nach zumindest einem der vorhergehenden Ansprüche,
**gekennzeichnet dadurch,**
**dass** es sich bei dem adaptiven Filter (7) um einen Bandpassfilter, insbesondere um einen Tiefpassfilter, insbesondere um einen Tiefpassfilter 2. Ordnung, handelt.

5. Vibronischer Sensor nach zumindest einem der vorhergehenden Ansprüche,
**gekennzeichnet dadurch,**
**dass** die Phasenregeleinheit (8) auf dem Prinzip eines Lock-In-Verstärkers basiert.

6. Vibronischer Sensor nach zumindest einem der vorhergehenden Ansprüche,
**gekennzeichnet dadurch,**
**dass** die Sollphasenverschiebung ($\Phi_{soll}$) 90°, 45°, oder 0° beträgt.

7. Vibronischer Sensor nach zumindest einem der vorhergehenden Ansprüche,
**gekennzeichnet dadurch,**
**dass** zumindest eine erste ($\Phi_{soll,1}$) und eine zweite Sollphasenverschiebung ($\Phi_{soll,2}$) abwechselnd einstellbar sind.

8. Vibronischer Sensor nach zumindest einem der vorhergehenden Ansprüche,
**gekennzeichnet dadurch,**
**dass** die Elektronikeinheit (6) eine Amplitudenregeleinheit (9) zur Regelung der Amplitude (A) des Anregesignals ($U_A$) auf einen vorgebbaren Wert ($A_{soll}$) oder auf einen Wert innerhalb eines vorgebbaren Intervalls umfasst.

9. Vibronischer Sensor nach zumindest einem der vorhergehenden Ansprüche,
**gekennzeichnet dadurch,**
**dass** die Elektronikeinheit (6) dazu ausgestaltet ist, einen Frequenz-Suchlauf auszuführen, im Falle des Unterschreitens eines vorgebbaren Schwellwerts für die Amplitude(A) die schwingfähige Einheit (4) mittels des Frequenz-Suchlaufs anzuregen, und die Mittenfrequenz ($f_m$) des adaptiven Filters (7) sukzessive auf innerhalb eines vorgebbaren Frequenzintervalls aufeinander folgende diskrete Anregefrequenzen einzustellen.

10. Vibronischer Sensor nach zumindest einem der vorhergehenden Ansprüche,
**gekennzeichnet dadurch,**
**dass** es sich bei der Prozessgröße um einen vorgebenen Füllstand, die Dichte und/oder die Viskosität des Mediums (2) in dem Behälter (3) handelt.

11. Vibronischer Sensor nach zumindest einem der vorhergehenden Ansprüche,
**gekennzeichnet dadurch,**
**dass** die schwingfähige Einheit (4) eine Membran, ein Einstab oder eine Schwinggabel ist.

12. Vibronischer Sensor nach zumindest einem der vorhergehenden Ansprüche,
**gekennzeichnet dadurch,**
**dass** es sich bei der Antriebs-/Empfangseinheit (5) um eine elektromagnetische oder um eine piezoelektrische Antriebs-/Empfangseinheit handelt.

13. Verfahren zum Betreiben eines vibronischen Sensors zur Bestimmung und/oder Überwachung zumindest einer Prozessgröße eines Mediums (2) in einem Behälter (3) gemäß zumindest einem der vorhergehenden Ansprüche,
wobei eine mechanisch schwingfähige Einheit (4) mittels eines elektrischen Anregesignals ($U_A$) zu mechanischen Schwingungen angeregt wird, und die mechanischen Schwingungen der mechanisch schwingfähigen Einheit (4) empfangen und in ein elektrisches Empfangssignal ($U_E$) umgewandelt werden,
wobei das Anregesignal ($U_A$) ausgehend vom Empfangssignal ($U_E$) erzeugt wird und die zumindest eine Prozessgröße bestimmt wird, wobei die Filtercharakteristik des adaptiven Filters (7) derart eingestellt wird, dass eine Sollphasenverschiebung ($\Phi_{soll}$) zwischen dem Anregesignal ($U_A$) und dem Empfangssignal ($U_E$) vorliegt,
wobei die Mittenfrequenz ($f_m$) des adaptiven Filters (7) derart geregelt wird, dass zwischen dem Anregesignal ($U_A$) und dem Empfangssignal ($U_E$) eine Sollphasenverschiebung ($\Phi_{soll}$) vorliegt, **gekennzeichnet dadurch,**
**dass** die Mittenfrequenz des adaptiven Filters derart geregelt wird, dass für eine Phasenverschiebung ($\Phi_{filter}$) zwischen einem Eingangssignal und einem Ausgangssignal des Filters ein vorgebbarer Wert vorliegt so, dass sich zwischen dem Anregesignal ($U_A$) und dem Empfangssignal ($U_E$) die Sollphasenverschiebung ($\Phi_{soll}$) ergibt, und
**dass** die Bandbreite (B) des adaptiven Filters (7) eingestellt wird.

**Claims**

1. Vibronic sensor (1) designed to determine and/or monitor at least one process variable of a medium (2) in a vessel (3), comprising at least a unit capable of vibrating mechanically (4), a drive/reception unit and an electronic unit (6), wherein the drive/reception unit (5) is designed to excite the unit that is capable of vibrating mechanically (4) to perform mechanical vibrations by means of an electrical excitation signal ($U_A$), and to receive the mechanical vibrations of the unit capable of vibrating mechanically (4) and to convert them to an electrical reception signal ($U_E$), wherein the electronic unit (6) is designed to generate the excitation signal ($U_A$) on the basis of the reception signal ($U_E$), and to determine the at least one process variable from the reception signal ($U_E$), wherein the electronic unit (6) comprises at least an adaptive filter (7),
**characterized in that**

the electronic unit (6) is designed to regulate the filter characteristic of the adaptive filter (7) in such a way that a target phase shift ($\varnothing_{soll}$) occurs between the excitation signal ($U_A$) and the reception signal ($U_E$), **in that** the electronic unit (6) is designed to regulate the target phase shift ($\varnothing_{soll}$) by setting the center frequency ($f_m$) of the adaptive filter (7), **in that** the electronic unit comprises a phase regulation unit, wherein said phase regulation unit is designed to regulate the center frequency of the adaptive filter in such a way that a predefinable value is present for a phase shift ($\varnothing_{filter}$) between an input signal and an output signal of the filter in such a way that results in the target phase shift ($\varnothing_{soll}$) between the excitation signal ($U_A$) and the reception signal ($U_E$), and **in that** the bandwidth (B) of the adaptive filter (7) can be set in a measuring mode for the purpose of reducing interference signals.

2. Vibronic sensor as claimed in Claim 1,
**characterized in that**
the electronic unit (6) comprises a ring memory and/or a phase shifter by means of which the target phase shift ($\varnothing_{soll}$) can be regulated.

3. Vibronic sensor as claimed in at least one of the previous claims,
**characterized in that**
the adaptive filter (7) is a resonator filter.

4. Vibronic sensor as claimed in at least one of the previous claims,
**characterized in that**
the adaptive filter (7) is a bandpass filter, particularly a low-pass filter, particularly a low-pass filter of the second order.

5. Vibronic sensor as claimed in at least one of the previous claims,
**characterized in that**
the phase regulation unit (8) is based on the principle of a lock-in amplifier.

6. Vibronic sensor as claimed in at least one of the previous claims,
**characterized in that**
the target phase shift ($\varnothing_{soll}$) is 90°, 45° or 0°.

7. Vibronic sensor as claimed in at least one of the previous claims,
**characterized in that**
at least a first target phase shift ($\varnothing_{soll,1}$) and a second target phase shift ($\varnothing_{soll,2}$) can be set alternately.

8. Vibronic sensor as claimed in at least one of the previous claims,
**characterized in that**

the electronic unit (6) comprises an amplitude regulation unit (9) to regulate the amplitude (A) of the excitation signal ($U_A$) to a predefinable value ($A_{soll}$) or to a value within a predefinable interval.

9. Vibronic sensor as claimed in at least one of the previous claims,
**characterized in that**
the electronic unit (6) is designed to perform a frequency search, to excite the unit capable of vibrating (4) by means of the frequency search in the event that a predefinable threshold value for the amplitude (A) is undershot, and to gradually regulate the center frequency ($f_m$) of the adaptive filter (7) to discrete excitation frequencies occurring consecutively within a predefinable frequency interval.

10. Vibronic sensor as claimed in at least one of the previous claims,
**characterized in that**
the process variable is a predefined level, the density and/or the viscosity of the medium (2) in the vessel (3).

11. Vibronic sensor as claimed in at least one of the previous claims,
**characterized in that**
the unit capable of vibrating (4) is a membrane, a single rod or a tuning fork.

12. Vibronic sensor as claimed in at least one of the previous claims,
**characterized in that**
the drive/reception unit (5) is an electromagnetic or piezoelectric drive/reception unit.

13. Procedure to operate a vibronic sensor for determining and/or monitoring at least a process variable of a medium (2) in a vessel (3) as claimed in at least one of the previous claims,
wherein a unit capable of vibrating mechanically (4) is excited to perform mechanical vibrations by means of an electrical excitation signal ($U_A$), and the mechanical vibrations of the unit capable of vibrating mechanically (4) are received and converted to an electrical reception signal ($U_E$),
wherein the excitation signal ($U_A$) is generated from the reception signal ($U_E$) and the at least one process variable is determined,
wherein the filter characteristic of the adaptive filter (7) is regulated in such a way that a target phase shift ($\varnothing_{soll}$) is produced between the excitation signal ($U_A$) and the reception signal ($U_E$),
wherein the center frequency ($f_m$) of the adaptive filter (7) is regulated in such a way that a target phase shift ($\varnothing_{soll}$) is present between the excitation signal ($U_A$) and the reception signal ($U_E$),
**characterized in that**

the center frequency ($f_m$) of the adaptive filter (7) is regulated in such a way that a predefinable value is present for a phase shift ($\varnothing_{filter}$) between an input signal and an output signal of the filter such that the target phase shift ($\varnothing_{soll}$) is produced between the excitation signal ($U_A$) and the reception signal ($U_E$), and **in that** the bandwidth (B) of the adaptive filter (7) is regulated.

## Revendications

1. Capteur vibronique (1) destiné à la détermination et/ou à la surveillance d'au moins une grandeur de process d'un produit (2) dans un réservoir (3), comprenant au moins une unité apte à vibrer mécaniquement (4), une unité d'entraînement / de réception et une unité électronique (6), l'unité d'entraînement / de réception (5) étant conçue pour exciter l'unité apte à vibrer mécaniquement (4) en vibrations mécaniques au moyen d'un signal d'excitation électrique ($U_A$), et pour recevoir les vibrations mécaniques de l'unité apte à vibrer mécaniquement (4) et les convertir en un signal de réception électrique ($U_E$), l'unité électronique (6) étant conçue pour générer le signal d'excitation ($U_A$) sur la base du signal de réception ($U_E$), et pour déterminer l'au moins une grandeur de process à partir du signal de réception ($U_E$), l'unité électronique (6) comprenant au moins un filtre adaptatif (7),
**caractérisé**
**en ce que** l'unité électronique (6) est conçue pour régler la caractéristique du filtre adaptatif (7) de telle sorte qu'un déphasage de consigne ($\varnothing_{soll}$) se produise entre le signal d'excitation ($U_A$) et le signal de réception ($U_E$),
**en ce que** l'unité électronique (6) est conçue pour régler le déphasage de consigne ($\varnothing_{soll}$) par réglage de la fréquence centrale ($f_m$) du filtre adaptatif (7), en ce que l'unité électronique comprend une unité de réglage de phase, laquelle unité de réglage de phase est conçue pour régler la fréquence centrale du filtre adaptatif de telle sorte qu'une valeur prédéfinissable soit présente pour un déphasage ($\varnothing_{filter}$) entre un signal d'entrée et un signal de sortie du filtre, de telle sorte à obtenir le déphasage de consigne ($\varnothing_{soll}$) entre le signal d'excitation ($U_A$) et le signal de réception ($U_E$), et
**en ce que** la largeur de bande (B) du filtre adaptatif (7) peut être réglée en mode de mesure en vue de réduire les signaux d'interférence.

2. Capteur vibronique selon la revendication 1,
**caractérisé**
**en ce que** l'unité électronique (6) comprend une mémoire tampon annulaire et/ou un déphaseur au moyen duquel le déphasage de consigne ($\varnothing_{soll}$) peut être réglé.

3. Capteur vibronique selon au moins l'une des revendications précédentes,
**caractérisé**
**en ce que**, concernant le filtre adaptatif (7), il s'agit d'un filtre à résonateur.

4. Capteur vibronique selon au moins l'une des revendications précédentes,
**caractérisé**
**en ce que**, concernant le filtre adaptatif (7), il s'agit d'un filtre passe-bande, notamment d'un filtre passe-bas, notamment d'un filtre passe-bas de deuxième ordre.

5. Capteur vibronique selon au moins l'une des revendications précédentes,
**caractérisé**
**en ce que** l'unité de réglage de phase (8) est basée sur le principe d'un amplificateur à détection synchrone.

6. Capteur vibronique selon au moins l'une des revendications précédentes,
**caractérisé**
**en ce que** le déphasage de consigne ($\emptyset_{soll}$) est de 90°, 45° ou 0°.

7. Capteur vibronique selon au moins l'une des revendications précédentes,
**caractérisé**
**en ce qu'**au moins un premier déphasage ($\emptyset_{soll,1}$) et un deuxième déphasage de consigne ($\emptyset_{soll,2}$) sont réglables en alternance.

8. Capteur vibronique selon au moins l'une des revendications précédentes,
**caractérisé**
**en ce que** l'unité électronique (6) comprend une unité de réglage d'amplitude (9) pour régler l'amplitude (A) du signal d'excitation ($U_A$) à une valeur prédéfinissable ($A_{soll}$) ou à une valeur comprise dans un intervalle prédéfinissable.

9. Capteur vibronique selon au moins l'une des revendications précédentes,
**caractérisé**
**en ce que** l'unité électronique (6) est conçue pour exécuter une recherche de fréquence, pour exciter l'unité apte à vibrer (4) au moyen de la recherche de fréquence en cas de passage sous une valeur seuil prédéfinissable pour l'amplitude (A), et pour régler successivement la fréquence centrale ($f_m$) du filtre adaptatif (7) sur des fréquences d'excitation discrètes successives dans un intervalle de fréquence prédéfinissable.

10. Capteur vibronique selon au moins l'une des revendications précédentes,
**caractérisé**
**en ce que**, concernant la variable de process , il s'agit d'un niveau prédéfini, de la densité et/ou de la viscosité du produit (2) dans le réservoir (3).

11. Capteur vibronique selon au moins l'une des revendications précédentes,
**caractérisé**
**en ce que** l'unité apte à vibrer (4) est une membrane, une tige unique ou une fourche vibrante.

12. Capteur vibronique selon au moins l'une des revendications précédentes,
**caractérisé**
**en ce que**, concernant l'unité d'entraînement / de réception (5), il s'agit d'une unité d'entraînement / de réception électromagnétique ou piézoélectrique.

13. Procédé pour l'exploitation d'un capteur vibronique destiné à la détermination et/ou à la surveillance d'au moins une grandeur de process d'un produit (2) dans un réservoir (3) selon l'une des revendications précédentes,
procédé pour lequel une unité apte à vibrer mécaniquement (4) est excitée en vibrations mécaniques au moyen d'un signal d'excitation électrique ($U_A$), et les vibrations mécaniques de l'unité apte à vibrer mécaniquement (4) sont reçues et converties en un signal de réception ($U_E$) électrique,
le signal d'excitation ($U_A$) étant généré à partir du signal de réception ($U_E$) et l'au moins une grandeur de process étant déterminée,
la caractéristique du filtre adaptatif (7) étant réglée de telle sorte qu'un déphasage de consigne ($\emptyset_{soll}$) se produise entre le signal d'excitation ($U_A$) et le signal de réception (UE),
la fréquence centrale ($f_m$) du filtre adaptatif (7) étant réglée de telle sorte à ce qu'un déphasage de consigne ($\emptyset_{soll}$) soit présent entre le signal d'excitation ($U_A$) et le signal de réception ($U_E$),
**caractérisé**
**en ce que** la fréquence centrale ($f_m$) du filtre adaptatif (7) est réglée de telle sorte qu'une valeur prédéfinissable soit présente pour un déphasage ($\emptyset_{filter}$) entre un signal d'entrée et un signal de sortie du filtre, de sorte à obtenir le déphasage de consigne ($\emptyset_{soll}$) entre le signal d'excitation ($U_A$) et le signal de réception ($U_E$), et en ce que la largeur de bande (B) du filtre adaptatif (7) est réglée.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034105 A1
- DE 102007013557 A1
- DE 102005015547 A1
- DE 102009026685 A1
- DE 102009028022 A1
- DE 102010030982 A1
- DE 00102010030982 A1
- DE 102012101667 A1
- DE 102010040219 A1
- DE 102010028303 A1
- DE 10161071 A1
- DE 10161072 A1